# EUROPEAN PATENT SPECIFICATION

(11) **EP 3 824 450 B1**
(45) Date of publication and mention of the grant of the patent: **09.04.2025**
(21) Application number: 19750178.6
(22) Date of filing: 18.07.2019
(51) Int. Cl.: G07F 11/00, G07F 11/36, H02K 11/215

(54) **A GEAR MOTOR FOR A VENDING MACHINE**
GETRIEBEMOTOR FÜR EINEN VERKAUFSAUTOMATEN
MOTEUR À ENGRENAGES POUR DISTRIBUTEUR AUTOMATIQUE

(30) Priority: 19.07.2018 IT 201800007343
(43) Date of publication of application: 26.05.2021
(73) Proprietor: ELBI International S.p.A., 10129 Torino (IT)
(72) Inventor: CAMBIAGHI, Gianluigi, 20821 Meda (Monza e Brianza) (IT); CREDARO, Antonio, 20020 Arese (Milano) (IT); BORSERINI, Maurizio, 20021 Baranzate (Milano) (IT)
(74) Representative: Vanzini, Christian
(86) International application number: PCT/IB2019/056148
(87) International publication number: WO 2020/016822

(56) References cited:
- WO-A1-2009/107149
- WO-A1-2015/019169
- WO-A2-2011/107407
- DE-A1- 1 474 866
- DE-U1- 202009 002 566
- US-A- 3 036 730
- US-A- 3 999 682
- US-A- 5 256 921
- US-A1- 2003 011 330
- US-A1- 2014 061 223
- US-A1- 2014 076 921

## Description

The present invention generally concerns gear motors, devices generally used to transform electrical energy, by means of an electric motor and a chain of gear wheels, into mechanical energy, with rotation speed and torque values suitable for the movement of objects or other mechanisms.

In particular, the present invention concerns a gear motor applicable to a vending machine of products, generally food or beverages, but also medicines, cigarettes or other products as in common practice. The vending machine consists of an external cabinet and horizontal or inclined drawers inside of which are placed the products to be distributed, arranged in rows and inserted in spirals. The spiral, attached to an output axis of the gear motor with a mechanical coupling, causes the advancement of the product to be delivered after it is selected by the customer.

In the drawer several spirals are placed parallel to each other; the same product is inserted in each spiral, whereas the products may differ among the individual spirals.

Delivery occurs by falling; the product advances pushed by the rotation of the spiral, which is driven by the gear motor, until it falls from the front part of the drawer.

The vending machine is equipped with its own electronics that drive the gear motor-spiral group relative to the selected product. The same electronics stop the gear motor when it receives the signal that the rotation has occurred from the system mounted on the same gear motor.

In particular, in this type of vending machine a special family of gear motors is used consisting of a motor, a reduction box and a circuit board with a rotation signaling system that comprises a sensor for measuring the angular position of the spiral.

In common practice, the gear motor stops rotating when the sensor verifies that the complete rotation required has been carried out. The duration of the rotation depends on the advancement of the spiral necessary to cause the product to fall. Depending on the size of the product, different advancements may be required to cause different products to fall from the drawer.

To obtain different advancements it is possible to use spirals with different pitches, so as to have different advancements with one full rotation of the gear motor.

However, this solution is not preferred from an industrial point of view or by the end user of the machine, since the adoption of different types of spirals within the same machine entails greater complexity and an increase in production costs, as well as significant replacement times if one wishes to change the spiral at the place of installation of the machine.

There is therefore a need to develop solutions that allow the advancement of the product to be varied with the same gear motor group and with the same spiral.

In consideration of the foregoing, a subject of the invention is thus a gear motor for a vending machine having the features of claim 1. The gear motor comprises
a box,
an electric motor mounted to the box and comprising a driving shaft entering into the box,
a train of gear wheels arranged within the box and driven by the driving shaft, the slowest of said gear wheels, hereinafter the output wheel, having a coupling interface by means of which the output wheel may be coupled to a dispensing member of the vending machine, and
a sensor arranged on the box and adapted to detect an angular position of the output wheel of the gear motor and provide a pulsed electric signal indicative of said angular position, said sensor comprising a movable part integral with the output wheel and having a detectable feature, and a fixed transduction part integral with the box and responsive to the detectable feature of the movable part.
wherein said movable part of the sensor is mechanically reconfigurable to reconfigure the electric signal of the sensor in number or angular position of pulses per revolution of the output wheel,
wherein the movable part of the sensor is supported by a movable part support which is removably mounted on the output wheel in such a way that the movable part of the sensor may be mechanically reconfigured.

A further subject of the invention is a gear motor having the features of claim 13. In this gear motor the fixed transduction part is mechanically reconfigurable to reconfigure the electric signal of the sensor in number or angular position of pulses per revolution of the output wheel, wherein the fixed transduction part of the sensor is adjustable in radial or axial position with respect to the rotation axis of the output wheel to allow the mechanical reconfiguration of the fixed transduction part of the sensor.

For the purposes of the present invention, adjustment in axial position means a displacement in the direction parallel to the rotation axis of the output wheel; adjustment in radial position means a displacement in the direction orthogonal to such rotation axis.

In particular, the movable part of the sensor may be mechanically reconfigured by at least one of:
- replacement from among different types of movable part supports having different configurations of the detectable feature,
- reversal of the different sides of the movable part support, said sides having different configurations of the detectable feature, and
- re-positioning of the movable part support in a plurality of different angular positions relative to the output wheel.

By way of non-limiting example, a detectable feature may be a magnetic field of a permanent magnet, in which case the fixed transduction part may be a magnetic sensor and in particular a Hall sensor. In the same manner and in a non-limiting way, the detectable feature may be a mechanical contact between the fixed part and the movable part of the sensor, which could be a protrusion as known in the art which uses micro-switches.

In the gear motor, according to the invention, it is therefore possible to act on the stop signaling system of the gear motor; in particular, it is possible to act on the possibility of providing that the sensor acts after a whole revolution or after partial rotations. Due to an element (fixed or movable part of the sensor) that may be reconfigured mechanically, for example mounted in two or more positions, it is possible to cause, over the span of the entire revolution, one or more signals for the driving electronics of the vending machine, signals that thus determine one or more stops, over the entire revolution (each stop is equivalent to a delivery of the product, as it has caused the advancement necessary for it to fall from the drawer).

Preferred embodiments of the present invention are the subject of the dependent claims, which form an integral part of the present description.

Further features and advantages of the invention will become apparent from the detailed description that follows, provided purely by way of non-limiting example with reference to the accompanying drawings, wherein:
Figure 1 is a perspective view of a gear motor according to the present invention;
Figures 2 to 5 are different views in orthogonal projection of the gear motor of Figure 1;
Figure 6 is an exploded view of the gear motor in Figure 1;
Figure 7 is a cross-sectional view of the gear motor in Figure 1;
Figures 7a and 7b are respectively a plan view and a cross-sectional view of a gear motor sensor with movable part according to a variant of the invention;
Figures 8a to 8d are respectively a perspective view, a plan view from the first side, a sectional view and a plan view from the second side of a movable sensor part support of the gear motor of Figure 1;
Figures 8e and 8f are schematic views that represent a possible way to reconfigure the sensor;
Figures 8g and 8h are schematic views that represent a possible way to reconfigure the fixed part of the sensor;
Figures 8i and 8j are respectively an exploded view and a sectional view of a gear motor with movable part support according to a variant of the invention;
Figure 9 is a plan view of a movable part of a sensor according to a variant of the invention;
Figure 10 represents a block diagram of the control system of the gear motor in Figure 1;
Figure 10a represents a diagram of a signal conditioning circuit of the system in Figure 10;
Figures 11 and 12 are graphs representing respectively an electrical signal emitted by a micro-switch sensor and by a Hall sensor, used in a same gear motor configuration;
Figure 11a is a schematic representation of a micro-switch sensor;
Figures 13 to 15 are respectively a perspective view, a front view and an exploded view of the gear motor provided with anti-explosion protection.

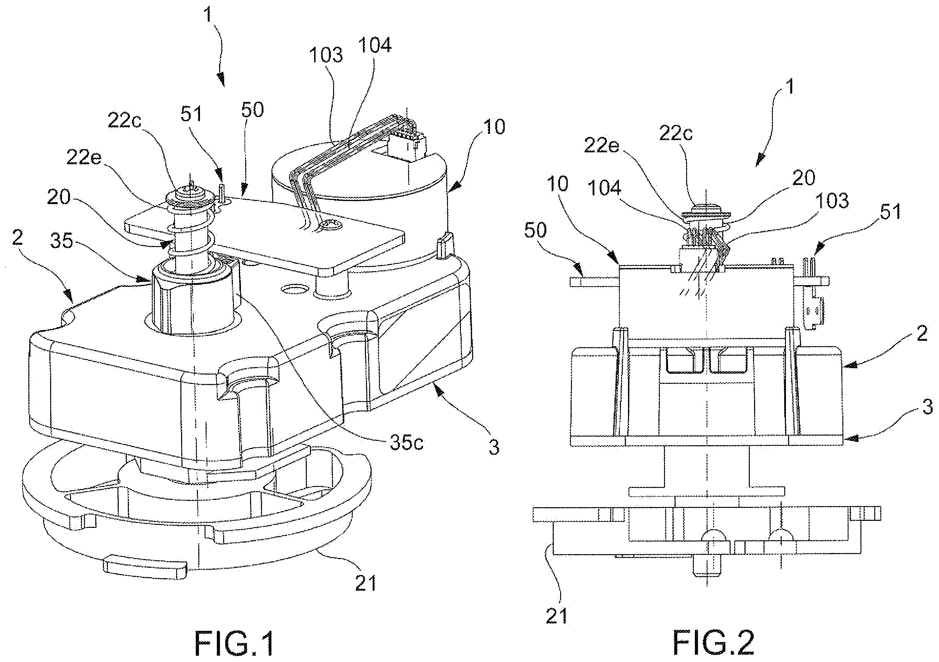

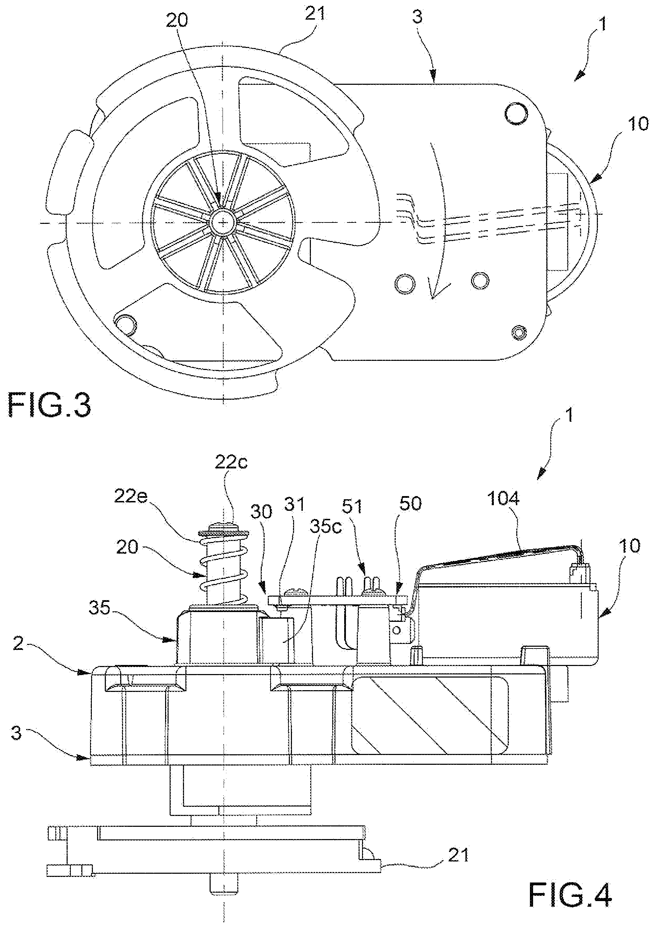

With reference to figures 1 to 7, a gear motor for a vending machine is represented, indicated collectively at 1.

The gear motor 1 comprises a box, which in the example illustrated comprises a main body 2 and a cover 3 mounted on top of one another.

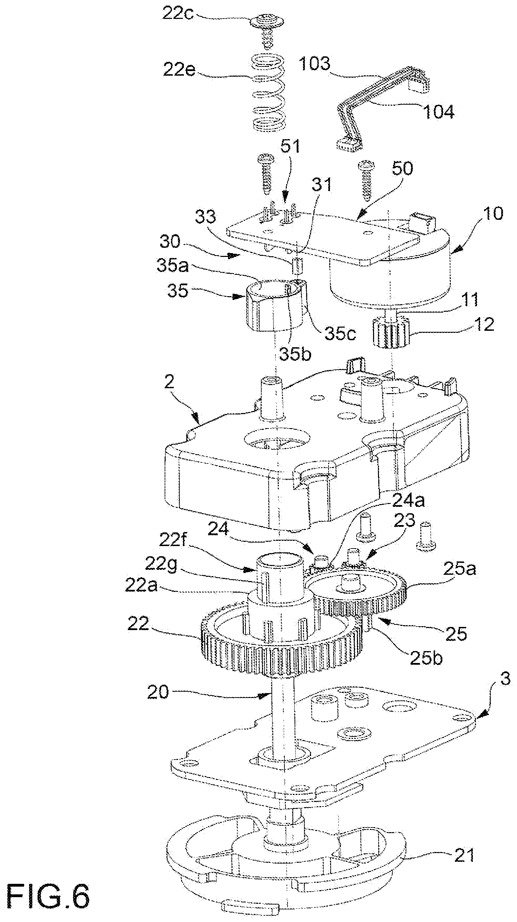

The gear motor 1 further comprises an electric motor 10 mounted on the box, which in the example shown is a brushless motor. The electric motor 10 comprises a driving shaft 11 (shown for example in Figure 6) which enters the box through a hole obtained in a wall of the main body 2 of the box. The end of the output shaft 11 of the electric motor within the box 2, 3 is provided with a gear wheel 12.

The gear motor 1 may further comprise an output shaft 20 emerging from the box 2, 3 and suitable to be coupled to a dispensing member of the vending machine, for example to a spiral (not illustrated). For this purpose, the end of the output shaft 20 of the gear motor outside the box 2, 3 is provided with an entrainment element 21, provided for the attachment of a distribution spiral. The output shaft 20 is driven by the driving shaft 11 by means of a train of gear wheels located inside the box 2, 3. In particular, on the output shaft 20 is mounted, with prismatic coupling, an output gear wheel 22. In the example illustrated, the train of gear wheels further comprises a first, a second and a third stage of reduction, 23, 24 and 25 respectively. The first stage of reduction 23 consists of a first gear wheel 23a and a second gear wheel 23b rotatable integrally around a rotation axis of the first stage 23. The second stage of reduction 24 comprises a first gear wheel 24a and a second gear wheel 24b, rotatable integrally around a rotation axis of the second stage 24. The third stage of reduction 25 comprises a first gear wheel 25a and a second gear wheel 25b rotatable integrally around a rotation axis of the third stage 25. The first gear wheel 23a of the first stage 23 engages with the gear wheel 12 of the driving shaft 11, and the second gear wheel 23b of the first stage 23, having a smaller diameter than the first gear wheel 23a of the first stage 23, engages with the first gear wheel 24a of the second stage 24. The second gear wheel 24b of the second stage 24, having a smaller diameter than the first gear wheel 24a of the second stage 24, engages with the first gear wheel 25a of the third stage 25. The second gear wheel 25b of the third stage 25, having a smaller diameter than the first gear wheel 25a of the third stage 25, engages with the output gear wheel 22. The configuration of the train of gear wheels is not essential for the purposes of the present invention and may differ from that described above. In any event, the rotation speed of the output shaft 20 is lower than the rotation speed of the driving shaft 11.

In the example illustrated, the output gear wheel 22 comprises a hub 22a that emerges from the box 2, 3 on the side opposite to the entrainment element 21, passing through a hole obtained in a wall of the main part 2 of the box. The hub 22a also has a through hole 22b, in which the output shaft 20 is inserted. A screw 22c is fixed to one end of the output shaft 20 on the side opposite to the entrainment element 21. A spring 22e is placed between the screw 22c and an abutment surface 22d of the hub 22a to compensate for any axial play between the output shaft 20 and the output gear wheel 22. The through hole 22b therefore acts as a coupling interface by means of which the output wheel 22, once mounted on the output shaft 20, may be coupled to the dispensing member of the vending machine.

The gear motor 1 further comprises a sensor 30 arranged on the box 2, 3 and capable of detecting an angular position of the output wheel 22 of the gear motor 1 and making available an electrical pulse signal indicating this angular position. The sensor 30 comprises a movable part 33 integral with the output wheel 22 and having a detectable feature, and a fixed transduction part 31 integral with the box 2, 3 and responsive to the detectable feature of the movable part 33.

The sensor 30 may be of the contact type, and thus may provide that, during rotation the movable part 33, it comes into contact with the fixed transduction part 31 whenever the movable part 33 is in an angular position corresponding to that of the fixed transduction part 31. An example of such a sensor is a micro-switch sensor, in which the contact between the movable part and fixed part triggers a switch.

Alternatively, and as shown in the figures, the sensor 30 may be of the non-contact type, for example a capacitive sensor or a magnetic sensor, such as a Reed sensor, a Hall sensor or a magnetoresistive sensor.

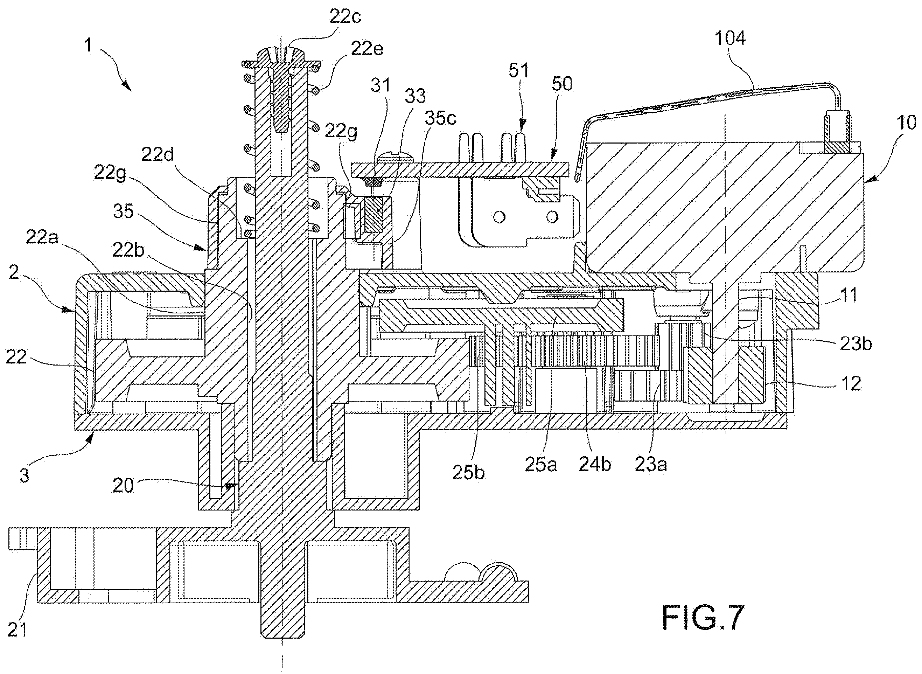

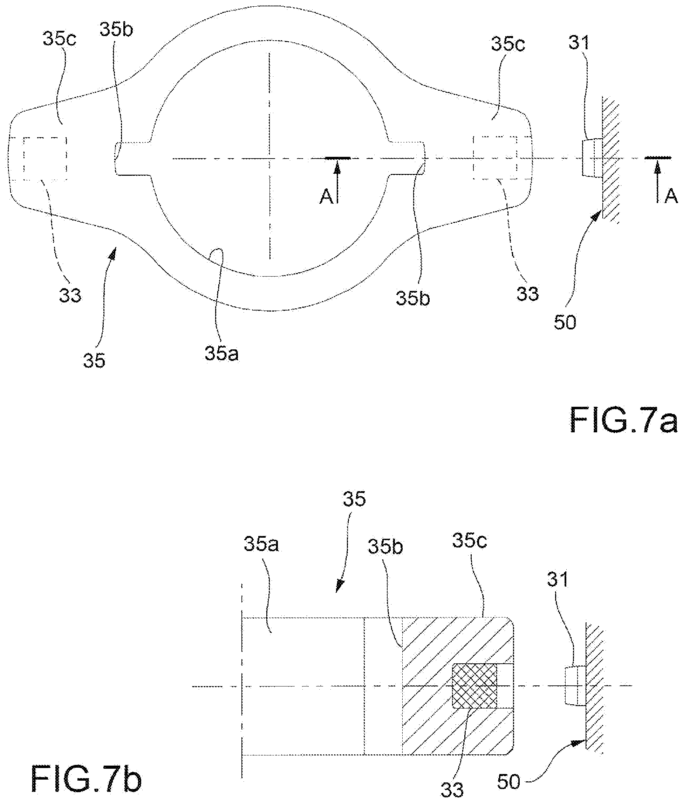

As shown in Figures 6 and 7, the arrangement of the movable part 33 and the fixed part 31 of the sensor may be such that the movable part 33 is arranged axially on one side or the other of the fixed part 31 ("axial arrangement"). In this case, during rotation, the movable part 33 is able to reach an angular position, wherein the movable part 33 is axially aligned with the fixed part 31. Alternatively, as shown in Figures 7a and 7b, the arrangement of the movable part 33 and the fixed part 31 of the sensor may be such that the movable part 33 is arranged radially on the outside of the fixed part 31 ("radial arrangement"). In this case, during rotation, the movable part 33 is able to reach an angular position wherein the movable part 33 is radially aligned with the fixed part 31.

A movable part support 35 is provided to support the movable part 33 of the sensor 30. This movable part support 35 is mounted on the output wheel 22 on the part of such wheel that is outside of the box 2, 3, on the side opposite to the entrainment element 21. The movable part support 35 is mounted on the output wheel 22 in a removable way to allow the mechanical reconfiguration of the movable part 33 of the sensor 30, as will be explained below. To this end, in the example illustrated, on the hub 22a of the output gear wheel 22 is obtained a mounting seat 22f adapted to receive the movable part support 35, the mounting seat of which has at least one key or tab and is suitable to be coupled with a hole 35a obtained in the movable part support 35 (as an alternative to the key, the hub may have a prismatic or cylindrical shape with a non-circular cross-section). This hole 35a is configured to allow the mechanical reconfiguration of the movable part 33 of the sensor 30. A possibility for reconfiguration, although of lesser interest, provides for the positioning of the movable part support 35 according to a plurality of different angular positions relative to the output wheel 22. In the example shown, the mounting seat 22f for the movable part support 35 has a pair of tabs 22g arranged in diametrically opposite positions of the mounting seat 22f, while the hole 35a has a longitudinal groove 35b adapted to be coupled with one of the two tabs 22g. In this way, it is possible to orient the movable part support 35 according to two different angular positions. This arrangement of tabs and grooves is also provided for in the embodiments shown in Figures 7a-7b, 8a-8d and 9. However, this is not essential to the invention, and the person skilled in the art can understand that there are several ways to achieve a possibility for angular adjustment of the movable part support 35 relative to the output shaft 20, even on more than two different angular positions.

According to a preferred embodiment, the sensor 30 is a magnetic sensor and its movable part 33 comprises at least one permanent magnet.

In the embodiments shown in the figures, the permanent magnet 33 is obtained as an insert or body made of a different material from that of the movable part support 35. The movable part support 35 may thus be obtained with a seat for the subsequent attachment of the permanent magnet 33, or it may be obtained around the permanent magnet 33, for example by means of a co-molding process.

The permanent magnet 33 may be a magnet made of metal, ceramic (e.g. ferrite) or composite material.

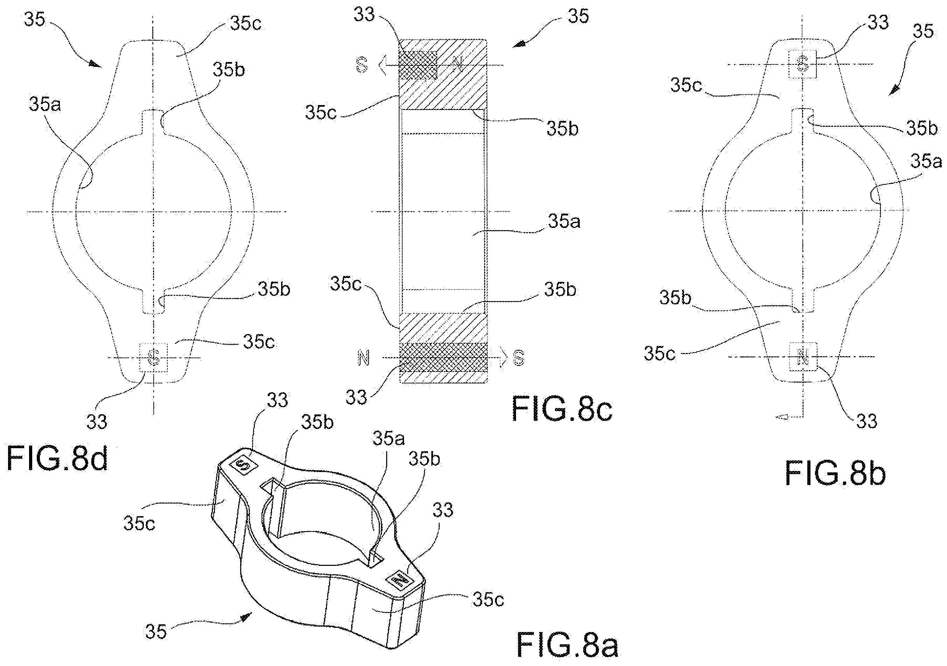

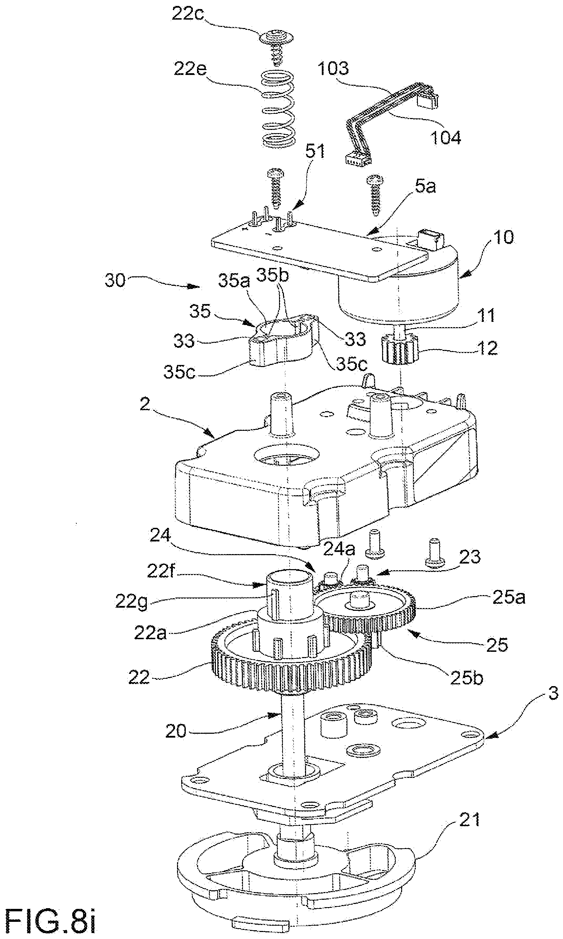

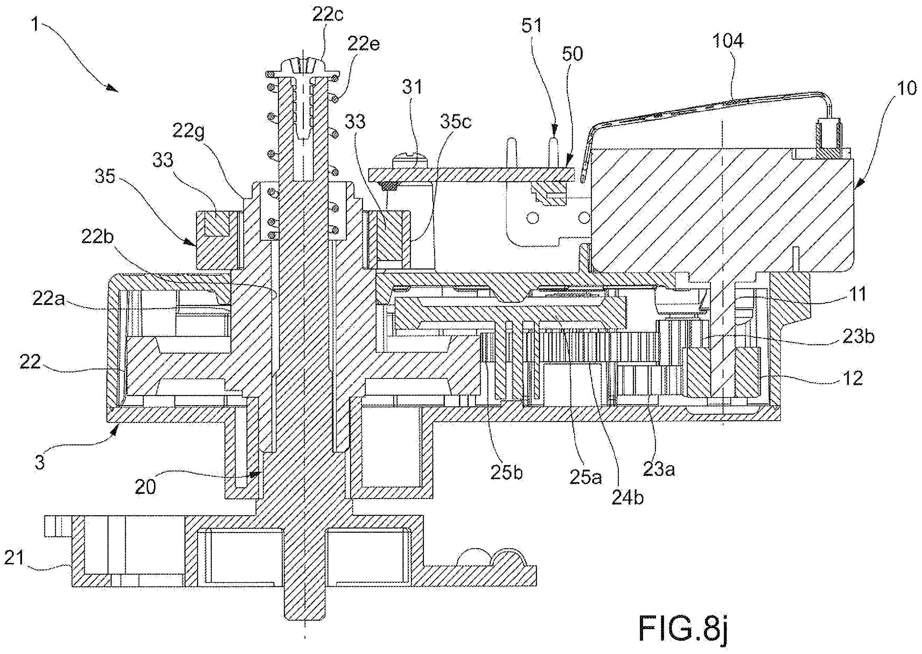

If there are provided several permanent magnets 33 placed on the movable part support 35, such magnets may have different shapes or pole orientations. In this way, it is possible to provide that each magnet will produce a different signal. For example, in the embodiment of Figures 8a-8d, there are two magnets with different lengths in the axial direction, and with inverted orientation of the poles relative to one another. In Figures 8i and 8j the gear motor in Figures 1-7 is shown, to which however is associated the movable part support 35 of the sensor illustrated in Figures 8a-8d.

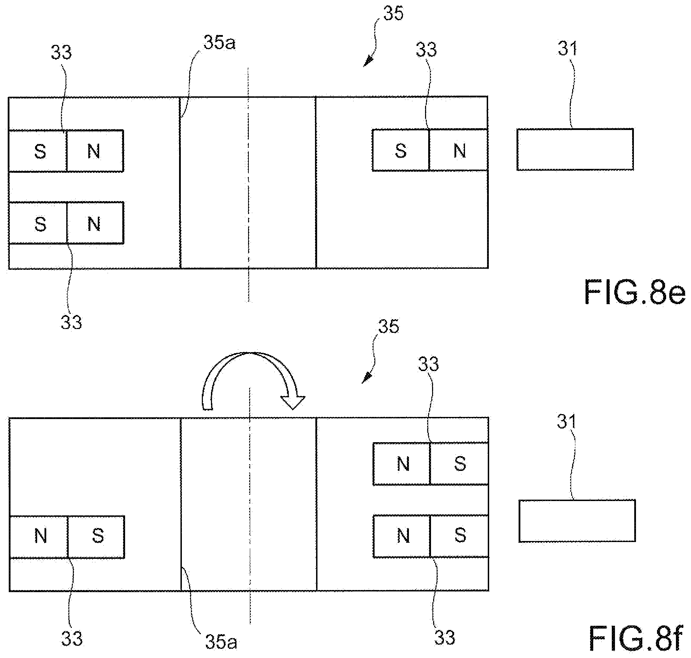

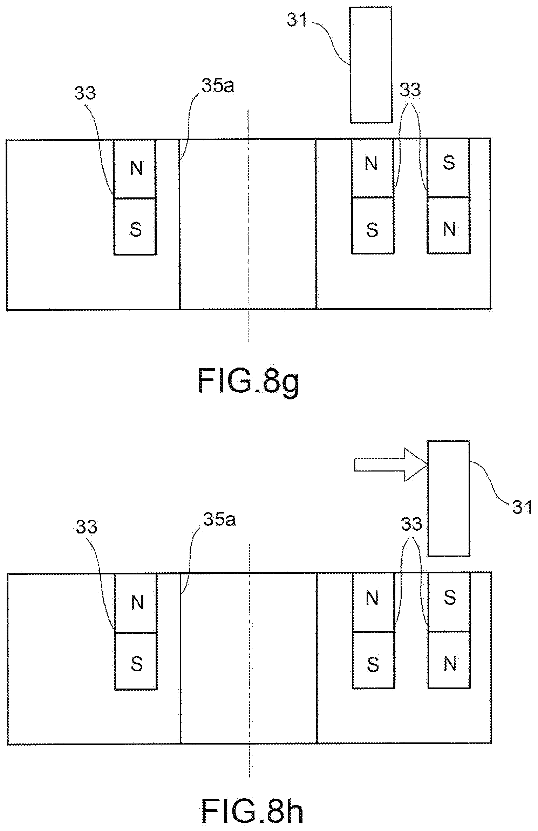

The magnets may be arranged with their poles oriented in an axial direction, as in the embodiments of Figures 6-7, 8a-8d and 9, or with the poles oriented in a radial direction, as in the embodiment of Figures 7a and 7b. Figures 8e and 8f show a variant wherein the magnets are oriented in a radial direction. At a first position of the movable part 33, only one magnet is provided, while at a second diametrically opposite position, two magnets placed on different axial positions are provided (one of which, however, being placed at the same axial height as the magnet of the first position). Figures 8g and 8h show another variant wherein the magnets are oriented in an axial direction. At a first position of the movable part 33, only one magnet is provided, while at a second diametrically opposite position, two magnets placed at different radial positions are provided (one of which, however, being placed at the same radial height as the magnet of the first position).

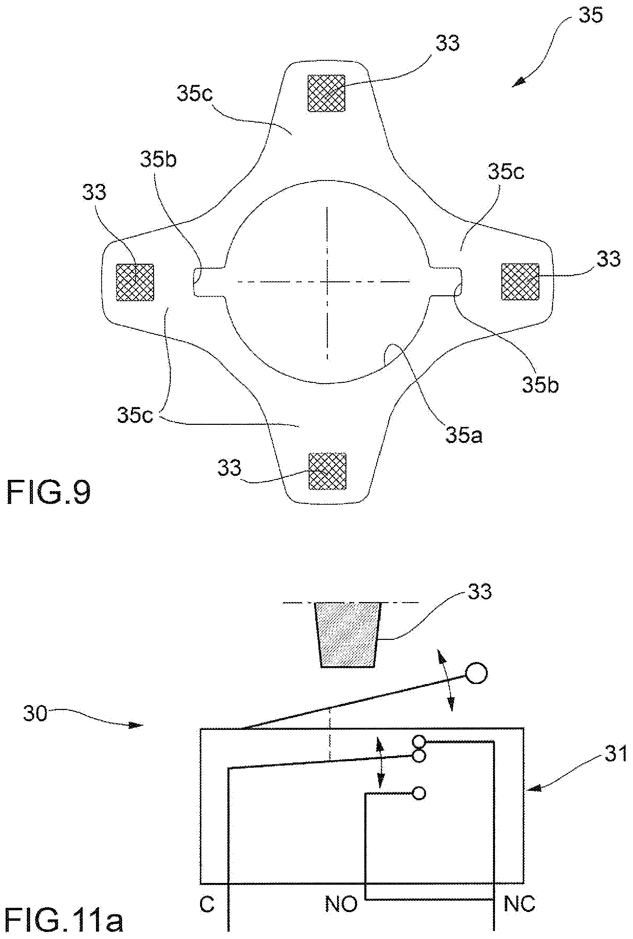

The movable part support 35 may be provided with radial protrusions or lobes on which the permanent magnets 33 are arranged. The example in figure 9 shows the movable part support 35 in a configuration provided with four radial protrusions with the respective permanent magnets 33.

In general, a multi-lobe system may allow the motor to stop on each lobe (at different degrees of rotation) or allow the motor to stop by counting the lobes passing under the sensor. Equivalently, by mounting the movable part support in the reverse (i.e. rotated 180° on an axis perpendicular to the axis of the shaft 20) and having the magnets facing non-uniformly in the two sides of the movable part support (Figures 8a-8d), with the same movable part of the sensor, one may obtain different "programming" of the system's operation or different signals sent for each complete revolution on which one may program stops for fractions of an angle turn (for example every 180°, 120° or 90°). Specifically, with the same movable part of the sensor in Figures 8a-8d, wherein on one side there is only one south extension and on the other side there are two extensions, in this case opposite north and south, depending on which of the two sides faces the fixed part of sensor 31, there is a different number and quality of signals for each complete revolution. Some Hall sensors are in effect able to discriminate even on the polarity of the extension of the magnet that it meets, thus this system has a further degree of discrimination.

In radial constructions (figures 8e and 8f) the magnets may be arranged on 2 different axial heights in the corresponding lobes, so that by mounting the movable part of the sensor in one direction or in the opposite direction (obtained by rotating the movable part on an axis perpendicular to the axis of the hole 35a, as indicated by the arrow in Figure 8f) the fixed sensor 31 reads a different number and quality of signals for each revolution depending on the orientation of the movable part.

Equivalently, the result of having several pulses per revolution with the same element 35 may be obtained with a vertical translation (i.e. a relative motion of only positioning) of the sensor 31, i.e. on the dimension defined parallel to the axis of the hole 35a. An equivalent solution may also be implemented for the axial construction (Figures 8g and 8h) by changing the position on the diameter if the fixed transduction part 31 is displaced on different circumferences. For this purpose, for example, the fixed transduction part may be mounted on a guide that allows the axial and/or radial position of the fixed transduction part (31) to be adjusted relative to the rotation axis of the output wheel 22.

According to an alternative embodiment, the permanent magnets 33 and the movable part support 35 are made of the same magnetizable composite material, e.g. plastoferrite. In this case, the permanent magnets may be formed by subjecting specific areas of the movable part support 35 to selective magnetization.

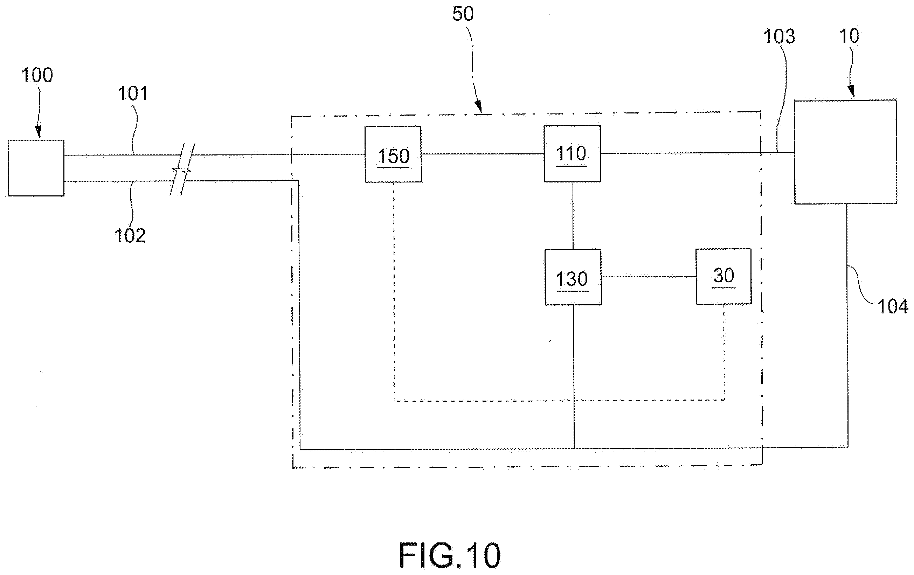

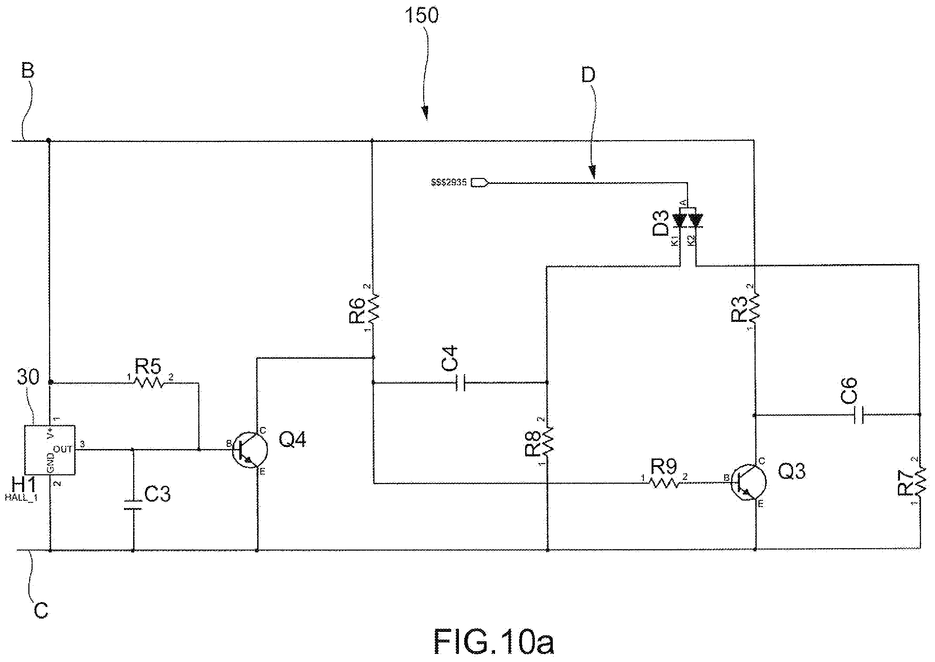

With reference to Figure 10, a circuit diagram of a gear motor control system is shown. The gear motor may be the one described above or, more generally, it may be any gear motor wherein the sensor is a Hall sensor.

The control system comprises a conventional type driving circuit 100, typically located on a circuit board in the vending machine. The driving circuit is connected to the electric motor 10 and to the sensor 30 to drive the electric motor 10 on the basis of signals provided by the sensor 30, by means of a pair of power lines. To this end, a printed circuit board 50 with connector terminals 51 is installed on the gear motor 1, which is adapted to be coupled with complementary connector terminals associated with the power lines 101, 102. On the circuit board 50 there is provided the sensor 30, a sensor power supply 130, a motor power supply 110 as well as a signal conditioning circuit 150, which will be described hereinafter. The electric motor 10 is electrically connected to the board 50 through a pair of cables 103, 104.

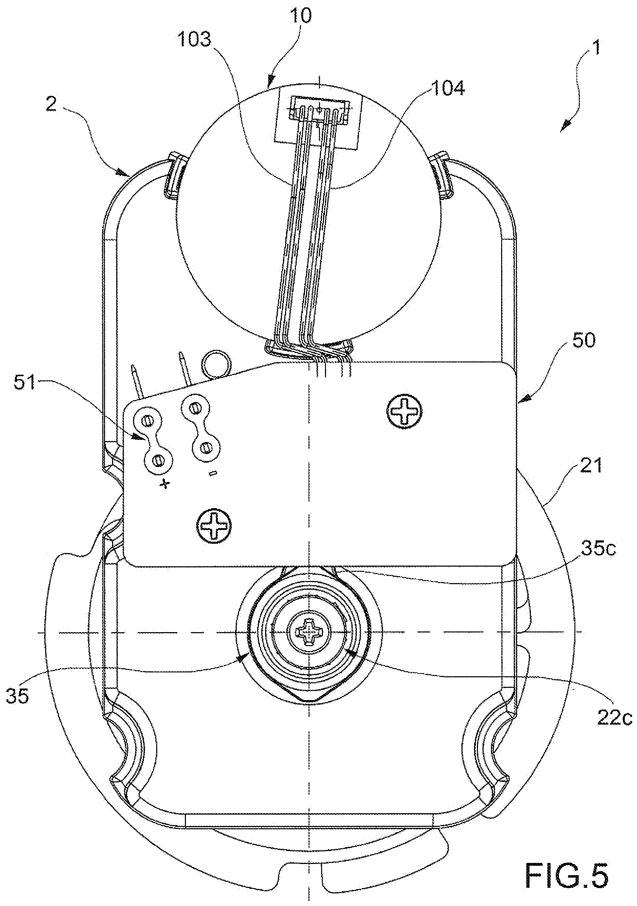

In the gear motor described above, for reconfiguration purposes it is possible to remove the movable part support 35 in a simple way, since such support is positioned outside the box 2, 3. For this purpose, with a movable sensor part with only 2 lobes, it is possible, during maintenance of the product vending machine (reloading the products to be dispensed, for example), to position the movable part so as to disengage the printed circuit board 50 (for example, by rotating the movable part by 90° on the axis of the shaft 20 relative to that which is shown in figure 5). In this position it is possible to manually remove the movable part of the sensor without any additional tools and reposition or replace it in order to reprogram the stop points of the gear motor according to the product to be dispensed. If the movable part support has more than 2 lobes, it is possible to provide shaped boards that allow the movable part support of the sensor to be removed in a preferential disassembly position.

With reference to figures 10a, 11 and 12, the signal conditioning circuit 150 is configured to convert the signal provided by the Hall sensor 30 into a second signal that approximates the signal that would be provided by a micro-switch applied to the same gear motor. In this way it is possible to adopt the gear motor with Hall sensor also in a conventional vending machine having a control system based on micro-switch signals without requiring hardware or software adaptations to the vending machine.

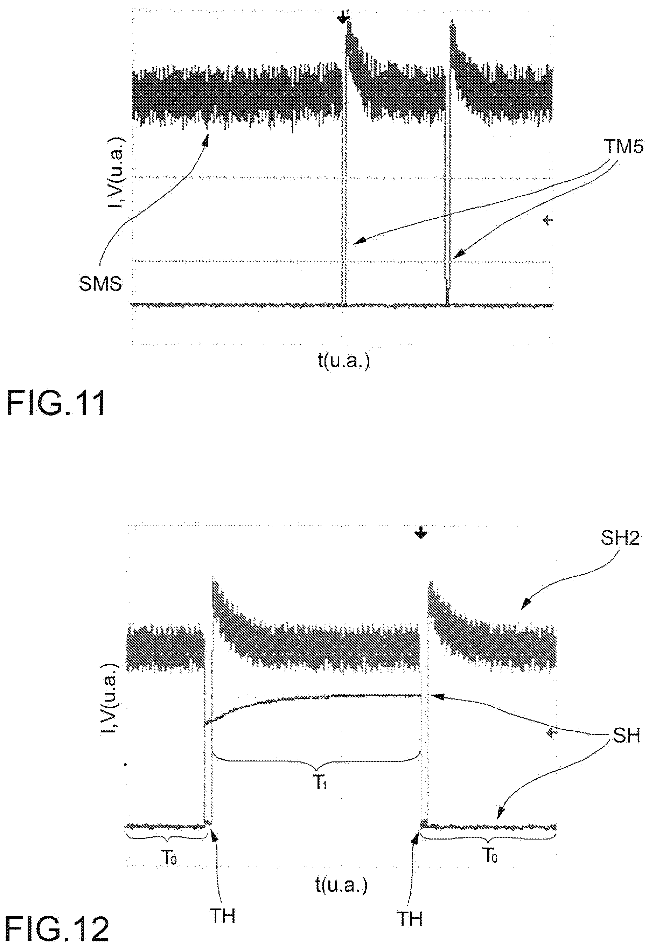

The graph in Figure 11 represents the typical current signal supplied by a micro-switch associated with a gear motor. The abscissa indicates the time t and the ordinate the intensity of the electrical signal, which may be current I or voltage V (in arbitrary units). The signal trend is represented by the curve indicated at SMS. The micro-switch (see Figure 11a) has the NO (normally open) and NC (normally closed) contacts in short circuit; there is a brief interruption of the current flow when the internal movable contact of the micro-switch changes from one contact (NO or NC) to the other (NC or NO). This change corresponds to the moment wherein the movable part 33 of the micro-switch sensor (cam) comes into contact with the fixed transduction part of the micro-switch sensor, mechanically causing the switching of the internal movable contact of the micro-switch. Consequently, the signal generated by the micro-switch always assumes a value different from zero, except for (at least) one approximately instantaneous transient (indicated at TMS) corresponding to the passage of the movable part 33 of the sensor at the fixed part 31, wherein the signal assumes a substantially null value.

The graph in Figure 12 represents the signal provided by a Hall sensor associated with a gear motor (equivalent shape is obtained reading either the voltage or the current signals). The abscissa indicates the time t and the ordinate the intensity of the signal (in arbitrary units). The signal trend is represented by the curve indicated at SH.

The signal provided by the Hall sensor, hereinafter referred to as the first signal, comprises (at least) a first time interval T0 wherein the signal assumes an approximately null value, and (at least) a second time interval T1 wherein the signal assumes a value other than zero, corresponding to the passage of the movable part 33 of the sensor in an area around the fixed transduction part 31, wherein the Hall sensor is excited.

The signal conditioning circuit 150 is configured to transform the first signal SH into a second signal SH2 that simulates the trend of the signal of a micro-switch. In particular, the signal SH2 will assume a value different from zero both in the first temporal interval T0 and in the second temporal interval T1, while a transient of a suitable duration TH will be generated, wherein the signal SH2 assumes a substantially null value, at the leading and trailing edges of the signal SH. The duration of the transient TH is a design datum imposed by the micro-switch that one desires to replace with the Hall sensor. Specifically, given the duration of TH that one wants to achieve, one acts on the sizing of the electronic components of the circuit 150 but also on the magnetic force of the magnet of the movable part, responsiveness of the Hall sensor, defined distance between sensor and movable part, rotation speed. These design quantities not only have an impact on TH, but also on the intensity, duration and shape of T1. Normally the TH value is in the range of 1 to 30 ms.

Figure 10a shows an example of a possible wiring diagram for obtaining the signal conditioning circuit 150. In the diagram, resistors are indicated at R3, R5, R6, R7, R8 and R9, capacitors at C3, C4 and C6, and bipolar-junction transistors at Q3 and Q4. B and C indicate the input and output of the signal conditioning circuit 150, while D indicates a line that serves as motor protection (not essential for signal conditioning).

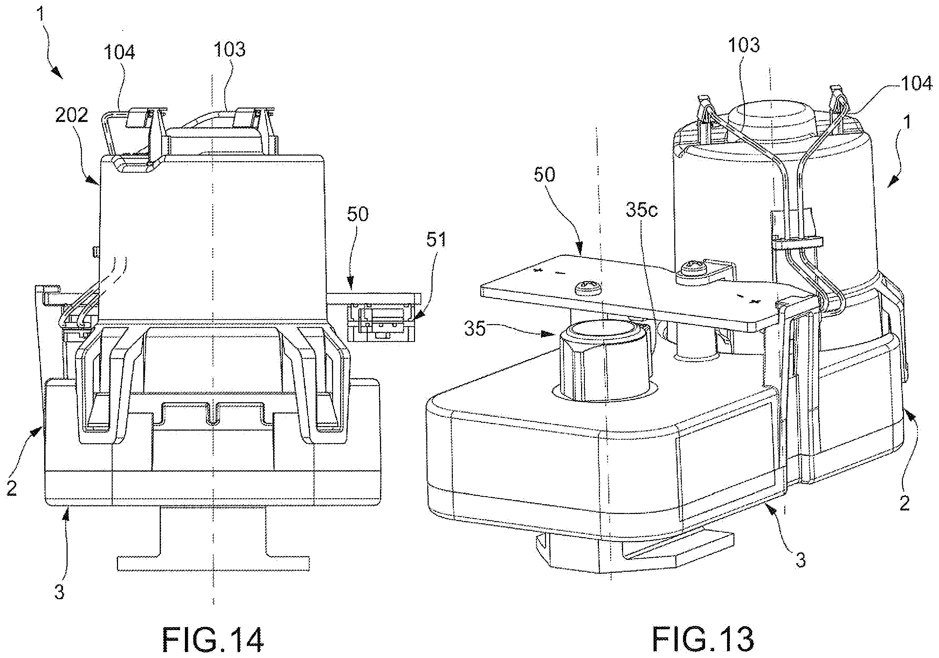

With reference to Figures 13 to 15, another embodiment is represented, which differs from that represented in Figures 1 to 7 in that the electric motor used is a brushed motor. The same reference numbers have been assigned to elements corresponding to those of the preceding embodiment. For a discussion of these elements, one should refer to the preceding part of the description.

If the vending machine is associated with a refrigeration system that uses potentially flammable refrigerants, the system must comply with certain safety regulations. As far as the gear motor is concerned, measures must be applied that make the creation of electric arcs and thus sparks during operation innocuous, as these may be sources of ignition for combustion and consequent explosions in the event of spillage or leakage of flammable refrigerant fluids inside the compartment wherein the gear motors are installed. In this condition, in effect, it is possible to have a flammable refrigerant and air mixture (normally contained in the compartment of the vending machine).

From this perspective, the adoption of a Hall sensor and a brushless motor in the gear motor is preferable because there are no sparking phenomena.

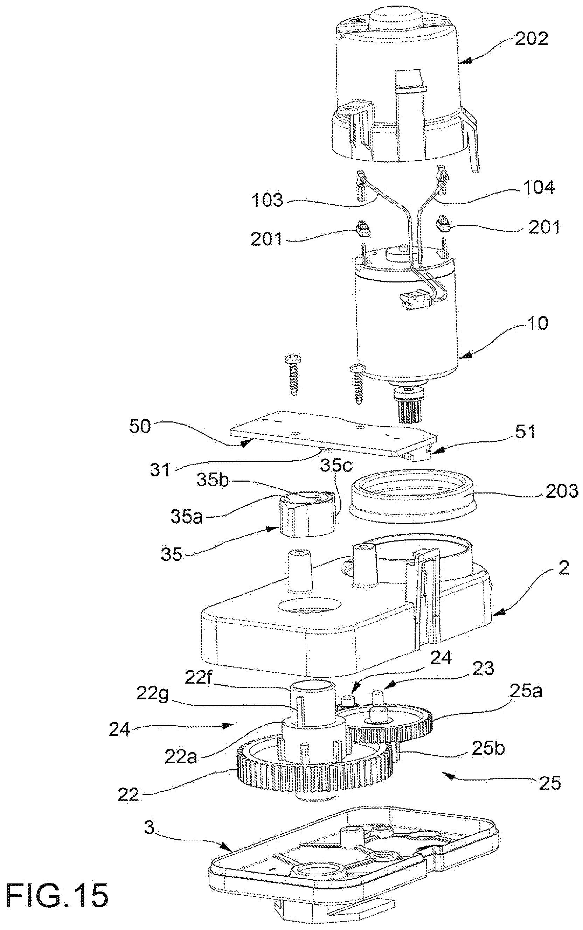

If a brushed motor is used (indicated at 10 in Figure 15), it is thus preferable to adopt anti-explosion protection around the sliding contacts of the electric motor or more generally around the entire motor (as in figures 13-15) or in the rear part thereof. The purpose of this protection is to reduce the volume of air around the contacts, so that any explosion produced by a spark involves a reduced combustion volume (mixture of air and any flammable refrigerant) and is therefore extremely small. This protection may be achieved, for example, as a sort of cap placed around the contacts (gaskets 201 in Figure 15) or more generally around the motor (elements 202, 203 in Figure 15), or as a heat-shrinkable sheath that wraps the motor before its assembly on the gear motor. In particular, in Figures 13-15 the protection comprises a cap 202 that encloses the motor 10, and a gasket 203 placed between an edge of the cap 202 and the printed circuit board 50. These protective measures may be adopted in different types of gear motors, not necessarily in those described above, in particular, not necessarily in a gear motor equipped with a sensor with a fixed or movable reconfigurable part.

It is understood that the features described with reference to a specific embodiment may be applied, where compatible, also to the other embodiments described.

## Claims

1. A gear motor for a vending machine comprising,
a box (2, 3),
an electric motor (10) mounted on the box (2, 3) and comprising a driving shaft (11) entering into the box (2, 3),
a train of gear wheels (12, 23, 24, 25, 22) arranged within the box (2, 3) and driven by the driving shaft (11), the slowest (22) of said gear wheels, hereinafter output wheel (22), having a coupling interface (22b) by means of which the output wheel may be coupled to a dispensing member of the vending machine, and
a sensor (30) arranged on the box (2, 3) and adapted to detect an angular position of the output wheel (22) of the gear motor and provide a pulsed electric signal indicative of said angular position, said sensor comprising a movable part (33) integral with the output wheel (22) and having a detectable feature, and a fixed transduction part (31) integral with the box (2, 3) and responsive to the detectable feature of the movable part (33),
the gear motor being **characterized in that** said movable part (33) of the sensor (30) is mechanically reconfigurable to reconfigure the electric signal of the sensor (30) in number or angular position of pulses per revolution of the output wheel (22),
wherein the movable part (33) of the sensor (30) is supported by a movable part support (35) which is removably mounted on the output wheel (22) in such a way that the movable part (33) of the sensor (30) may be mechanically reconfigured,
wherein the output wheel (22) has a mounting seat (22f) adapted to receive the movable part support (35), said mounting seat adapted to be coupled to a hole (35a) obtained in the movable part support (35) and configured to allow the mechanical reconfiguration of the movable part (33),
wherein the mounting seat (22f) has at least one key or tab, a prismatic shape or a cylindrical shape with a non-circular cross-section .

2. Gear motor according to claim 1, wherein the movable part (33) of the sensor (30) may be mechanically reconfigured by means of at least one of:
- replacement between different types of movable part support (35) having different configurations of the detectable feature,
- reversal of different sides of the movable part support (35), said sides having different configurations of the detectable feature, and
- re-positioning of the movable part support (35) between a plurality of different angular positions relative to the output wheel (20).

3. A gear motor according to any of the preceding claims, wherein said sensor (30) is a magnetic sensor and said movable part (33) comprises at least one permanent magnet.

4. A gear motor according to claim 3, wherein said permanent magnet is a metal, ceramic or composite magnet arranged on the movable part support (35), said movable part support being of material different from the material of the permanent magnet.

5. A gear motor according to claim 3, wherein said movable part support is of magnetizable composite material, and wherein said permanent magnet is formed by a magnetized area of said movable part support.

6. A gear motor according to any of claims 3 to 5, wherein said movable part support comprises a plurality of radial projections (35c), at which a respective permanent magnet (33) is arranged.

7. A gear motor according to any of claims 3 to 6, wherein said movable part support supports a plurality of permanent magnets (33) having different shape or polar orientation.

8. A gear motor according to claim 7, wherein said movable part support supports a plurality of permanent magnets (33) having different length in the axial direction or in the radial direction.

9. A gear motor according to any of the preceding claims, further comprising a driving circuit (100) electrically connected to the electric motor (10) and to the sensor (30) to drive the electric motor (10) based on the signals provided by the sensor (30), wherein the sensor (30) is a Hall sensor, and wherein the gear motor further comprises a signal conditioning circuit (150) connected on one side to the sensor (30) and on the other side to the driving circuit (100), said signal conditioning circuit (150) being configured to convert the signal (SH) provided by the Hall sensor (30), hereinafter first signal, into a second signal (SH2) approximating a signal provided by a micro-switch.

10. A gear motor according to claim 9, wherein the first signal (SH) comprises a first time interval (T0) wherein the signal has an approximately null value, and a second time interval (T1) wherein the signal has a value different from zero, and wherein the second signal (SH2) has a value different from zero in both the first time interval (T0) and the second time interval (T1), a transient state (TH) between the first time interval (T0) and the second time interval (T1) being provided, wherein the second signal (SH2) has an approximately null value.

11. A gear motor according to any of the preceding claims, wherein the electric motor (10) is a brushless motor.

12. A gear motor according to any of claims 1 to 10, wherein the electric motor is a brushed electric motor, wherein there is provided an anti-explosion protection arranged at least around sliding contacts of the electric motor.

13. A gear motor for a vending machine comprising,
a box (2, 3),
an electric motor (10) mounted on the box (2, 3) and comprising a driving shaft (11) entering into the box (2, 3),
a train of gear wheels (12, 23, 24, 25, 22) arranged within the box (2, 3) and driven by the driving shaft (11), the slowest (22) of said gear wheels, hereinafter output wheel (22), having a coupling interface (22b) by means of which the output wheel may be coupled to a dispensing member of the vending machine, and
a sensor (30) arranged on the box (2, 3) and adapted to detect an angular position of the output wheel (22) of the gear motor and provide a pulsed electric signal indicative of said angular position, said sensor comprising a movable part (33) integral with the output wheel (22) and having a detectable feature, and a fixed transduction part (31) integral with the box (2, 3) and responsive to the detectable feature of the movable part (33),
the gear motor being **characterized in that** said fixed transduction part (31) of the sensor (30) is mechanically reconfigurable to reconfigure the electric signal of the sensor (30) in number or angular position of pulses per revolution of the output wheel (22),
wherein the movable part (33) of the sensor (30) is supported by a movable part support (35) which is removably mounted on the output wheel (22) in such a way that the movable part (33) of the sensor (30) may be mechanically reconfigured,
wherein the fixed transduction part (31) of the sensor (30) is adjustable in radial or axial position with respect to the rotation axis of the output wheel (22) to allow the mechanical reconfiguration of the fixed transduction part (31) of the sensor (30).

## Patentansprüche

1. Getriebemotor für einen Verkaufsautomaten, umfassend,
ein Gehäuse (2, 3),
einen Elektromotor (10), der auf dem Gehäuse (2, 3) eingebaut ist und eine Antriebswelle (11) umfasst, die in das Gehäuse (2, 3) eintritt,
einen Zahnräderzug (12, 23, 24, 25, 22), der in dem Gehäuse (2, 3) angeordnet ist und von der Antriebswelle (11) angetrieben wird, wobei das langsamste (22) der Zahnräder, nachfolgend Abtriebsrad (22), eine Kupplungsschnittstelle (22b) aufweist, durch welche das Abtriebsrad mit einem Ausgabeelement des Verkaufsautomaten gekoppelt werden kann, und
einen Sensor (30), der an dem Gehäuse (2, 3) angeordnet ist und angepasst ist, eine Winkelposition des Abtriebsrads (22) des Getriebemotors zu erfassen und ein gepulstes elektrisches Signal bereitzustellen, das die Winkelposition anzeigt, wobei der Sensor einen beweglichen Teil (33), der einstückig mit dem Abtriebsrad (22) ausgebildet ist und ein erfassbares Element aufweist, und einen Festwandlungsteil (31) umfasst , der einstückig mit dem Gehäuse (2, 3) ausgebildet ist und auf das erfassbare Element des beweglichen Teils (33) reagiert,
der Getriebemotor **dadurch gekennzeichnet, dass** der bewegliche Teil (33) des Sensors (30) mechanisch rekonfigurierbar ist, um das elektrische Signal des Sensors (30) in Bezug auf die Anzahl oder die Winkelposition der Impulse pro Umdrehung des Abtriebsrads (22) zu rekonfigurieren,
wobei der bewegliche Teil (33) des Sensors (30) von einer beweglichen Teilehalterung (35) gehalten wird, die lösbar auf dem Abtriebsrad (22) eingebaut ist, sodass der bewegliche Teil (33) des Sensors (30) mechanisch rekonfiguriert werden kann,
wobei das Abtriebsrad (22) einen Montagesitz (22f) aufweist, der angepasst ist, die bewegliche Teilhalterung (35) aufzunehmen, wobei der Montagesitz angepasst ist, mit einer Bohrung (35a) gekoppelt zu werden, die in der beweglichen Teilhalterung (35) erreicht wird und konfiguriert ist, eine mechanische Rekonfiguration des beweglichen Teils (33) zu ermöglichen,
wobei der Montagesitz (22f) mindestens einen Schlüssel oder Zapfen, eine prismatische Form oder eine zylindrische Form mit einem nicht kreisförmigen Querschnitt aufweist.

2. Getriebemotor nach Anspruch 1, wobei der bewegliche Teil (33) des Sensors (30) mechanisch durch mindestens eines der folgenden Mittel rekonfiguriert werden kann:
- Austausch zwischen verschiedenen Arten von beweglichen Teilhalterungen (35), die unterschiedliche Konfigurationen des erfassbaren Elements aufweisen,
- Umkehrung der verschiedenen Seiten der beweglichen Teilhalterung (35), wobei die Seiten unterschiedliche Konfigurationen des erfassbaren Elements aufweisen, und
- Neu Positionierung der beweglichen Teilhalterung (35) zwischen einer Vielzahl von unterschiedlichen Winkelpositionen in Bezug auf das Abtriebsrad (20).

3. Getriebemotor nach einem der vorhergehenden Ansprüche, wobei der Sensor (30) ein Magnetsensor ist und der bewegliche Teil (33) mindestens einen Permanentmagnet umfasst.

4. Getriebemotor nach Anspruch 3, wobei der Permanentmagnet ein Metall-, Keramik- oder Verbundmagnet ist, der auf der beweglichen Teilhalterung (35) angeordnet ist, wobei die bewegliche Teilhalterung aus einem Material besteht, das sich von dem Material des Permanentmagnets unterscheidet.

5. Getriebemotor nach Anspruch 3, wobei die bewegliche Teilhalterung aus einem magnetisierbaren Verbundmaterial besteht, und wobei der Permanentmagnet durch einen magnetisierten Bereich der beweglichen Teilhalterung gebildet wird.

6. Getriebemotor nach einem der Ansprüche 3 bis 5, wobei die bewegliche Teilhalterung eine Vielzahl von Radialvorsprüngen (35c) umfasst, an denen jeweils ein entsprechender Permanentmagnet (33) angeordnet ist.

7. Getriebemotor nach einem der Ansprüche 3 bis 6, wobei die bewegliche Teilhalterung eine Vielzahl von Permanentmagneten (33) hält, die unterschiedliche Formen oder polare Orientierungen aufweisen.

8. Getriebemotor nach Anspruch 7, wobei die bewegliche Teilhalterung eine Vielzahl von Permanentmagneten (33) hält, die unterschiedliche Längen in Axialrichtung oder in Radialrichtung aufweisen.

9. Getriebemotor nach einem der vorhergehenden Ansprüche, ferner umfassend eine Antriebsschaltung (100), die elektrisch mit dem Elektromotor (10) und dem Sensor (30) verbunden ist, um den Elektromotor (10) basierend auf den von dem Sensor (30) bereitgestellten Signalen anzutreiben, wobei der Sensor (30) ein Hall-Sensor ist, und wobei der Getriebemotor ferner eine Signalformungsschaltung (150) umfasst, die auf einer Seite mit dem Sensor (30) und auf der anderen Seite mit der Antriebsschaltung (100) verbunden ist, wobei die Signalformungsschaltung (150) konfiguriert ist, das von dem Hall-Sensor (30) bereitgestellte Signal (SH), nachfolgend erstes Signal, in ein zweites Signal (SH2) umzuwandeln, das einem von einem Mikroschalter bereitgestellten Signal sehr nahe kommt.

10. Getriebemotor nach Anspruch 9, wobei das erste Signal (SH) ein erstes Zeitintervall (T0) umfasst, in dem das Signal einen etwa Nullwert hat, und ein zweites Zeitintervall (T1), in dem das Signal einen von Null verschiedenen Wert hat, und wobei das zweite Signal (SH2) sowohl in dem ersten Zeitintervall (T0) als auch in dem zweiten Zeitintervall (T1) einen von Null verschiedenen Wert hat, wobei ein Übergangszustand (TH) zwischen dem ersten Zeitintervall (T0) und dem zweiten Zeitintervall (T1) vorgesehen ist, in dem das zweite Signal (SH2) einen etwa Nullwert hat.

11. Getriebemotor nach einem der vorhergehenden Ansprüche, wobei der Elektromotor (10) ein bürstenloser Motor ist.

12. Getriebemotor nach einem der Ansprüche 1 bis 10, wobei der Elektromotor ein elektrischer Bürstenmotor ist, wobei ein Explosionsschutz mindestens um die Gleitkontakte des Elektromotors vorgesehen ist.

13. Getriebemotor für einen Verkaufsautomaten, umfassend,
ein Gehäuse (2, 3),
einen Elektromotor (10), der auf dem Gehäuse (2, 3) eingebaut ist und eine Antriebswelle (11) umfasst, die in das Gehäuse (2, 3) eintritt,
einen Zahnräderzug (12, 23, 24, 25, 22), der in dem Gehäuse (2, 3) angeordnet ist und von der Antriebswelle (11) angetrieben wird, wobei das langsamste (22) der Zahnräder, nachfolgend Abtriebsrad (22), eine Kupplungsschnittstelle (22b) aufweist, durch welche das Abtriebsrad mit einem Ausgabeelement des Verkaufsautomaten gekoppelt werden kann, und
einen Sensor (30), der an dem Gehäuse (2, 3) angeordnet ist und angepasst ist, eine Winkelposition des Abtriebsrads (22) des Getriebemotors zu erfassen und ein gepulstes elektrisches Signal bereitzustellen, das die Winkelposition anzeigt, wobei der Sensor einen beweglichen Teil (33), der einstückig mit dem Abtriebsrad (22) ausgebildet ist und ein erfassbares Element aufweist, und einen Festwandlungsteil (31) umfasst, der einstückig mit dem Gehäuse (2, 3) ausgebildet ist und auf das erfassbare Element des beweglichen Teils (33) reagiert,
der Getriebemotor **dadurch gekennzeichnet, dass** der Festwandlungsteil (31) des Sensors (30) mechanisch rekonfigurierbar ist, um das elektrische Signal des Sensors (30) in Bezug auf die Anzahl oder die Winkelposition der Impulse pro Umdrehung des Abtriebsrads (22) zu rekonfigurieren,
wobei der bewegliche Teil (33) des Sensors (30) von einer beweglichen Teilhalterung (35) gehalten wird, die lösbar auf dem Abtriebsrad (22) eingebaut ist, sodass der bewegliche Teil (33) des Sensors (30) mechanisch rekonfiguriert werden kann,
wobei der Festwandlungsteil (31) des Sensors (30) in Radialposition oder Axialposition in Bezug auf die Drehachse des Abtriebsrads (22) einstellbar ist, um die mechanische Rekonfiguration des Festwandlungsteils (31) des Sensors (30) zu ermöglichen.

## Revendications

1. Moteur à engrenages pour distributeur automatique comprenant,
une boîte (2, 3),
un moteur électrique (10) monté sur la boîte (2, 3) et comprenant un arbre d'entraînement (11) pénétrant dans la boîte (2, 3),
un train de roues dentées (12, 23, 24, 25, 22) disposé à l'intérieur de la boîte (2, 3) et entraîné par l'arbre d'entraînement (11), la plus lente (22) desdites roues dentées, ci-après roue de sortie (22), possédant une interface de couplage (22b) par laquelle la roue de sortie peut être couplée à un organe de distribution du distributeur automatique, et
un capteur (30) disposé sur la boîte (2, 3) et conçu pour détecter une position angulaire de la roue de sortie (22) du moteur à engrenages et fournir un signal électrique pulsé indiquant ladite position angulaire, ledit capteur comprenant une partie mobile (33) solidaire de la roue de sortie (22) et présentant une caractéristique détectable, et une partie fixe de transduction (31) solidaire de la boîte (2, 3) et réagissant à la caractéristique détectable de la partie mobile (33),
le moteur à engrenages étant **caractérisé en ce que** ladite partie mobile (33) du capteur (30) est mécaniquement reconfigurable pour reconfigurer le signal électrique du capteur (30) en nombre ou position angulaire des impulsions par révolution de la roue de sortie (22),
dans lequel la partie mobile (33) du capteur (30) est supportée par un support de partie mobile (35) qui est monté de manière amovible sur la roue de sortie (22) de telle manière que la partie mobile (33) du capteur (30) peut être mécaniquement reconfigurée,
dans lequel la roue de sortie (22) possède un logement de montage (22f) conçu pour recevoir le support de partie mobile (35), ledit logement de montage étant conçu pour être couplé à un trou (35a) réalisé dans le support de partie mobile (35) et configuré pour permettre la reconfiguration mécanique de la partie mobile (33),
dans lequel le logement de montage (22f) possède au moins une clé ou une languette, une forme prismatique ou une forme cylindrique avec une section transversale non circulaire.

2. Moteur à engrenages selon la revendication 1, dans lequel la partie mobile (33) du capteur (30) peut être mécaniquement reconfigurée au moyen d'au moins une des opérations suivantes:
- remplacement entre différents types de support de partie mobile (35) ayant des configurations différentes de la caractéristique détectable,
- inversion des différents côtés du support de partie mobile (35), lesdits côtés ayant des configurations différentes de la caractéristique détectable, et
- repositionnement du support de partie mobile (35) entre une pluralité de positions angulaires différentes par rapport à la roue de sortie (20).

3. Moteur à engrenages selon l'une des revendications précédentes, dans lequel ledit capteur (30) est un capteur magnétique et ladite partie mobile (33) comprend au moins un aimant permanent.

4. Moteur à engrenages selon la revendication 3, dans lequel ledit aimant permanent est un aimant métallique, céramique ou composite disposé sur le support de partie mobile (35), ledit support de partie mobile étant constitué d'un matériau différent de celui de l'aimant permanent.

5. Moteur à engrenages selon la revendication 3, dans lequel ledit support de partie mobile est constitué d'un matériau composite magnétisable, et dans lequel ledit aimant permanent est formé par une zone magnétisée dudit support de partie mobile.

6. Moteur à engrenages selon l'une des revendications 3 à 5, dans lequel ledit support de partie mobile comprend une pluralité de projections radiales (35c), à chacune desquelles un aimant permanent respectif (33) est disposé.

7. Moteur à engrenages selon l'une des revendications 3 à 6, dans lequel ledit support de partie mobile supporte une pluralité d'aimants permanents (33) ayant des formes ou des orientations polaires différentes.

8. Moteur à engrenages selon la revendication 7, dans lequel ledit support de partie mobile supporte une pluralité d'aimants permanents (33) ayant des longueurs différentes dans la direction axiale ou dans la direction radiale.

9. Moteur à engrenages selon l'une des revendications précédentes, comprenant en outre un circuit de commande (100) électriquement connecté au moteur électrique (10) et au capteur (30) pour commander le moteur électrique (10) en fonction des signaux fournis par le capteur (30), dans lequel le capteur (30) est un capteur à effet Hall, et dans lequel le moteur à engrenages comprend en outre un circuit de conditionnement du signal (150) connecté d'un côté au capteur (30) et de l'autre côté au circuit de commande (100), ledit circuit de conditionnement du signal (150) étant configuré pour convertir le signal (SH) fourni par le capteur à effet Hall (30), ci-après premier signal, en un second signal (SH2) approximant un signal fourni par un micro-interrupteur.

10. Moteur à engrenages selon la revendication 9, dans lequel le premier signal (SH) comprend un premier intervalle de temps (T0) dans lequel le signal a une valeur approximativement nulle, et un second intervalle de temps (T1) dans lequel le signal a une valeur différente de zéro, et dans lequel le second signal (SH2) a une valeur différente de zéro à la fois dans le premier intervalle de temps (T0) et dans le second intervalle de temps (T1), un état transitoire (TH) étant prévu entre le premier intervalle de temps (T0) et le second intervalle de temps (T1), dans lequel le second signal (SH2) a une valeur approximativement nulle.

11. Moteur à engrenages selon l'une des revendications précédentes, dans lequel le moteur électrique (10) est un moteur sans balais.

12. Moteur à engrenages selon l'une des revendications 1 à 10, dans lequel le moteur électrique est un moteur électrique à balais, sans lequel une protection antidéflagrante est prévue au moins autour des contacts glissants du moteur électrique.

13. Moteur à engrenages pour distributeur automatique comprenant:
une boîte (2, 3),
un moteur électrique (10) monté sur la boîte (2, 3) et comprenant un arbre d'entraînement (11) pénétrant dans la boîte (2, 3),
un train de roues dentées (12, 23, 24, 25, 22) disposé à l'intérieur de la boîte (2, 3) et entraîné par l'arbre d'entraînement (11), la plus lente (22) desdites roues dentées, ci-après roue de sortie (22), possédant une interface de couplage (22b) par laquelle la roue de sortie peut être couplée à un organe de distribution du distributeur automatique, et
un capteur (30) disposé sur la boîte (2, 3) et conçu pour détecter une position angulaire de la roue de sortie (22) du moteur à engrenages et fournir un signal électrique pulsé indiquant ladite position angulaire, ledit capteur comprenant une partie mobile (33) solidaire de la roue de sortie (22) et présentant une caractéristique détectable, et une partie fixe de transduction (31) solidaire de la boîte (2, 3) et réagissant à la caractéristique détectable de la partie mobile (33),
le moteur à engrenages étant **caractérisé en ce que** ladite partie fixe de transduction (31) du capteur (30) est mécaniquement reconfigurable pour reconfigurer le signal électrique du capteur (30) en nombre ou position angulaire des impulsions par révolution de la roue de sortie (22), dans lequel la partie mobile (33) du capteur (30) est supportée par un support de partie mobile (35) qui est monté de manière amovible sur la roue de sortie (22) de telle manière que la partie mobile (33) du capteur (30) peut être mécaniquement reconfigurée,
dans lequel la partie fixe de transduction (31) du capteur (30) est réglable en position radiale ou axiale par rapport à l'axe de rotation de la roue de sortie (22) pour permettre la reconfiguration mécanique de la partie fixe de transduction (31) du capteur (30).
